# EUROPÄISCHE PATENTSCHRIFT

(11) **EP 3 685 036 B1**
(45) Veröffentlichungstag und Bekanntmachung des Hinweises auf die Patenterteilung: **25.06.2025**
(21) Anmeldenummer: 18762289.9
(22) Anmeldetag: 30.08.2018
(51) Int. Cl.: F03D 7/02, F03D 7/04

(54) **WINDENERGIEANLAGE UND VERFAHREN ZUM BETREIBEN EINER WINDENERGIEANLAGE**
WIND TURBINE AND METHOD FOR OPERATING A WIND TURBINE
ÉOLIENNE ET PROCÉDÉ PERMETTANT DE FAIRE FONCTIONNER UNE ÉOLIENNE

(30) Priorität: 18.09.2017 DE 102017121563
(43) Veröffentlichungstag der Anmeldung: 29.07.2020
(73) Patentinhaber: Wobben Properties GmbH, 26607 Aurich (DE)
(72) Erfinder: VON ASWEGE, Enno, 26629 Großefehn (DE)
(74) Vertreter: Eisenführ Speiser
(86) Internationale Anmeldenummer: PCT/EP2018/073346
(87) Internationale Veröffentlichungsnummer: WO 2019/052827

(56) Entgegenhaltungen:
- EP-A1- 1 988 284
- EP-A1- 2 927 486
- EP-A2- 3 276 164
- DE-A1- 19 532 409

## Beschreibung

Die vorliegende Erfindung betrifft ein Verfahren zum Betreiben einer Windenergieanlage. Außerdem betrifft die vorliegende Erfindung eine solche Windenergieanlage.

Windenergieanlagen sind bekannt und sie erzeugen elektrische Leistung aus Wind. Wird der Wind allerdings zu stark, insbesondere wenn er Sturmwindgeschwindigkeiten erreicht, kann es sinnvoll sein, die Windenergieanlage zum Schutz abzuschalten und besonders in Fahnenstellung zu bringen, so dass sie möglichst wenig Angriffsfläche für den Sturm bietet.

Um ein solches Abschalten zu verhindern, oder zumindest so hinauszuschieben, dass erst möglichst spät, also bei möglichst hohen Windgeschwindigkeiten die Anlage wirklich abgeschaltet werden muss, sind einige Lösungen vorgeschlagen worden, die Windenergieanlage bei sehr hohen, gefährdenden Windgeschwindigkeiten zunächst nur in ihrer Drehzahl oder Leistung zu reduzieren. Ein Beispiel hierfür ist in der Offenlegungsschrift DE 195 32 409 angegeben. Dort werden ab einer früheren Abschaltgeschwindigkeit mit weiter steigender Windgeschwindigkeit die Drehzahl und die Leistung reduziert, statt die Windenergieanlage dort abzuschalten.

Eine solche Regelung hat sich bewährt, gleichwohl können Verbesserungen vorgesehen werden.

Beispielsweise ergibt sich eine Belastung der Windenergieanlagen nicht ausschließlich aus der vorherrschenden, nämlich gemittelten Windgeschwindigkeit, sondern auch die Böigkeit des Windes kann für die Belastung eine Rolle spielen. Auch ein Wechsel in der Windrichtung kann eine Rolle für die Belastung spielen.

Die Böigkeit könnte durch ein entsprechend schnelles Abfahren der Kennlinien berücksichtigt werden, wenn also eine Böe nur als schnelle Änderung der Windgeschwindigkeit betrachtet wird. Dies kann aber eine entsprechend schnelle Regelung notwendig machen.

Eine wechselnde Windrichtung kann durch eine entsprechende Azimutverstellung berücksichtigt werden. Aber auch hier wäre zum Erreichen einer Belastungsreduktion eine schnelle Regelung erforderlich.

Es kommt hinzu, dass bei einer solchen schnellen Regelung, sowohl hinsichtlich variierender Windgeschwindigkeit als auch variierender Windrichtung Einstellungen der Windenergieanlage verändert werden, besonders auch der Blattwinkel der Rotorblätter, was wiederum die Belastung beeinflusst.

Ebenfalls kommt hinzu, dass moderne Windenergieanlagen zunehmend größere Rotoren aufweisen, deren Durchmesser 140 Meter und mehr betragen können. Bei solchen großen Rotordurchmessern und einer entsprechend großen Rotorfläche, nämlich die Fläche, die von den Rotorblättern überstrichen wird, spielen dann auch noch örtlich variierende Windgeschwindigkeiten eine Rolle.

Im Ergebnis ergeben sich viele Faktoren, die die Belastung der Windenergieanlage erhöhen können. Es ist auch zu beachten, dass eine Überbeanspruchung der Windenergieanlage nicht automatisch zu einer Havarie führt, sondern vielmehr Ermüdungserscheinungen Einfluss auf die Gesamtlebensdauer der Windenergieanlage haben können. Insoweit kann eine zu erwartende Sturmbelastung und wie darauf reagiert wird, bereits für die Auslegung der Windenergieanlage eine wichtige Rolle spielen.

Eine Möglichkeit, diesem Problem zu begegnen wäre, eine belastungsreduzierende Betriebsweise der Windenergieanlage so zu gestalten, dass eine Sicherheitsreserve vorgesehen ist. Die Windenergieanlage kann also beispielsweise vorsorglich mit geringerer Drehzahl und weniger Leistung betrieben werden, als vielleicht nötig wäre. Mit einer solchen Regelung könnte die Sicherheit und die berechnete Laufzeit der Windenergieanlage gewährleistet werden, was aber durch Ertragseinbußen erkauft werden müsste.

Aus der EP 1 988 284 A1 ist ein Verfahren zum Betrieb einer Windturbine bekannt, bei dem die Rotordrehzahl und/oder Ausgangsleistung des Generators reduziert werden, um eine Windbelastung auf die Windturbine zu vermindern. Die Reduktion der Rotordrehzahl und/oder der Ausgangsleistung erfolgt abhängig von einer Abweichung der Windgeschwindigkeit von einer Durchschnittswindgeschwindigkeit, um eine unnötige Abschaltung der Windturbine zu vermeiden. Als Entscheidungskriterium, ob zur Entlastung der Windenergieanlage die Rotordrehzahl und/oder die elektrische Leistung reduziert wird oder die Windenergieanlage ganz abgeschaltet wird, wird nicht nur die Windgeschwindigkeit, sondern auch die Abweichung der Windgeschwindigkeit von einer durchschnittlichen Windgeschwindigkeit herangezogen. Zur Bestimmung eines Schwellenwerts, ab dem die Rotordrehzahl und/oder die elektrische Leistung vermindert wird, wird die Belastung auf die Rotorblätter ermittelt. Dies geschieht durch Computersimulationen oder mittels Sensoren, die auf den Rotorblättern angeordnet sind.

Das Deutsche Patent- und Markenamt hat in der Prioritätsanmeldung zur vorliegenden Anmeldung folgenden Stand der Technik recherchiert: DE 195 32 409 A1; DE 10 2006 034 106 A1; US 2009/0060740 A1; US 2009/0261588 A1; WO 2015/086024 A1 und WO 2017/036481 A1

Der vorliegenden Erfindung liegt somit die Aufgabe zugrunde, zumindest eines der beschriebenen Probleme zu adressieren. Insbesondere soll eine Lösung vorgeschlagen werden, bei der eine Windenergieanlage bei hohen Windgeschwindigkeiten so betrieben wird, dass die Windenergieanlage nicht über Gebühr belastet wird, gleichwohl möglichst viel Ertrag erzielt wird, wobei vorzugsweise auch Ungleichförmigkeiten des Windes mit berücksichtigt werden können. Zumindest soll zu bisher bekannten Lösungen eine alternative Lösung vorgeschlagen werden.

Die Erfindung ist durch die beigefügten Ansprüche definiert.

Erfindungsgemäß wird ein Verfahren gemäß Anspruch 1 vorgeschlagen. Demnach wird eine Windenergieanlage zum Erzeugen elektrischer Leistung aus Wind betrieben, die einen aerodynamischen Rotor mit einer Rotornabe und in ihrem Blattwinkel verstellbaren Rotorblättern aufweist. Der aerodynamische Rotor ist außerdem mit einer variablen Drehzahl betreibbar. Dazu weist die Windenergieanlage einen mit dem aerodynamischen Rotor gekoppelten Generator auf, zum Erzeugen einer Generatorleistung. Außerdem ist der Generator mit einem variablen Generatormoment betreibbar. Das Generatormoment kann beispielsweise durch einen Erregerstrom im Läufer des Generators beeinflusst werden.

Zum Betreiben dieser Windenergieanlage wird vorgeschlagen, dass eine Belastungsgröße ermittelt wird, die eine Belastung der Windenergieanlage durch den Wind angibt. Es wird also vorgeschlagen, nicht nur die Windgeschwindigkeit zu betrachten, sondern unmittelbar eine Belastungsgröße zu ermitteln und damit eine direkte Information über die Belastung der Windenergieanlage zu erhalten. Es kann dann unmittelbar diese Belastung berücksichtigt werden und es braucht kein oder kein sehr großer Sicherheitsaufschlag berücksichtigt zu werden. Das unmittelbare Ermitteln der Belastungsgröße ermöglicht auch, die Belastung zu erkennen und daraus Abschätzungen über Beeinflussungen der Restlebensdauer zu machen.

Es wird nun vorgeschlagen, dass die Drehzahl und/oder die Generatorleistung in einem Belastungsbetrieb in Abhängigkeit des Belastungsgrenzwertes reduziert werden. Zumindest werden die Drehzahl und die Generatorleistung, oder wenigstens eine der Größen, reduziert, wenn die Belastungsgröße einen vorbestimmbaren Belastungsgrenzwert erreicht. Es wird also die Belastung aufgenommen, aber zunächst von einem Standardbetrieb der Windenergieanlage nicht abgewichen. Es kann dann in einem Belastungsbetrieb geschaltet werden. Das kann abhängig der Belastungsgröße erfolgen, oder auch basierend auf einer Windgeschwindigkeitserfassung. Liegt der Belastungsbetrieb vor, können in Abhängigkeit der Belastungsgröße die Drehzahl und/oder die Generatorleistung reduziert werden. Es ist besonders vorteilhaft, beide Größen zu reduzieren, da sie beide auch die Belastung der Anlage reduzieren. Es kommt aber besonders auch in Betracht, zunächst nur eine der beiden zu reduzieren und dann, bei zunehmender Belastung auch die andere Größe zu reduzieren, dann also beide zu reduzieren.

Im einfachsten Fall ist vorgesehen, dass einfach dann, wenn diese ermittelte Belastungsgröße einen vorbestimmbaren Belastungsgrenzwert erreicht hat, die Drehzahl und die Generatorleistung in dem Belastungsbetrieb reduziert werden. Es wird also dann bei Erreichen dieses Belastungsgrenzwertes in den Belastungsbetrieb gewechselt. Der vorgebbare Belastungsgrenzwert muss kein Grenzwert sein, ab dem die Windenergieanlage gefährdet ist, sondern dieser Belastungsgrenzwert kann auch niedriger gewählt werden. Im Übrigen kann das auch bedeuten bzw. beinhalten, dass nicht sofort Drehzahl und Generatorleistung zugleich reduziert werden. Ihre Reduzierung ist aber in dem Belastungsbetrieb vorgesehen, vorzugsweise auch gleichzeitig und gleich zu Beginn des Wechselns in den Belastungsbetrieb.

Dazu wird nun vorgesehen, dass zur Ermittlung der Belastungsgröße eine auf die Windenergieanlage wirkende Kraftgröße verwendet wird. Das kann unmittelbar eine translatorische Kraft sein, oder eine in eine Drehrichtung oder Biegerichtung wirkende Kraftgröße. Das kann auch bedeuten, dass diese auf die Windenergieanlage wirkende Kraftgröße unmittelbar als Belastungsgröße verwendet wird. Es wird hier also eine mechanische Belastung zugrundegelegt. Insoweit kann synonym auch die auf die Windenergieanlage wirkende Kraftgröße als eine auf die Windenergieanlage wirkende mechanische Belastung bezeichnet werden. Das beinhaltet auch Biege- und Torsionsmomente oder Kombinationen daraus.

Jedenfalls wurde erkannt, dass eine direkte belastungsreduzierende oder belastungsbegrenzende Regelung erreicht werden kann, wenn eine auf die Windenergieanlage wirkende Kraftgröße unmittelbar verwendet wird. Aus dieser Kraftgröße kann dann insgesamt eine klare Belastung abgeleitet werden. Dabei kann eine solche Belastung auch für verschiedene Komponenten der Windenergieanlage auftreten. Aus Erfahrungswerten oder vorher aufgenommenen Simulationen können gegebenenfalls aus einer Belastung an einem speziellen Ort verschiedene Belastungen an verschiedenen Orten der Windenergieanlage abgeleitet werden. Dabei ist eine Belastung, besonders die betrachtete Kraftgröße, nicht unbedingt nur statisch als ein Wert zu betrachten. Es kommen auch Veränderungen der Kraftgröße in Betracht, die beispielsweise auch oszillierend auftreten können. Abhängig von solchen Eigenschaften kann die zugrundegelegte Kraftgröße an unterschiedlichen Stellen der Windenergieanlage zu relevanten Belastungsspitzen führen.

Die auf die Windenergieanlage wirkende Kraftgröße kann besonders aus Messungen ermittelt werden, dabei kommt aber auch in Betracht, dass sie sich aus mehreren Messungen zusammensetzt, bzw. zu ihrer Ermittlung mehrere Messungen an unterschiedlichen Orten der Windenergieanlage zugrundegelegt werden. Beispielsweise kann bei einer modernen Windenergieanlage mit drei Rotorblättern eine Belastungsmessung an jedem Rotorblatt vorgenommen werden und aus diesen Belastungsmessungen an den drei Rotorblättern dann eine insgesamt wirkende Kraftgröße an einem anderen Ort bestimmt werden.

Ein Belastungsbetrieb beschreibt besonders einen Sturmfall oder Sturmbetrieb, in dem Windgeschwindigkeiten auftreten, die einem Sturm entsprechen, oder darüber liegen. Besonders solche hohen Windgeschwindigkeiten können eine Windenergieanlage stark belasten oder sogar gefährden.

Vorzugsweise wird vorgeschlagen, dass ein Nabenbiegemoment erfasst wird und dass das Nabenbiegemoment zur Ermittlung der Belastungsgröße oder als Belastungsgröße verwendet wird. Ein solches Nabenbiegemoment ist besonders dadurch gut als Belastungsgröße geeignet, weil Kräfte, die auf sämtliche Rotorblätter wirken, insgesamt auf die Nabe wirken und damit das Nabenbiegemoment maßgeblich beeinflussen. Das Nabenbiegemoment wirkt dabei unmittelbar in der Nähe der Rotorblätter, die einen Großteil der Belastung auf die Windenergieanlage aufnehmen. Außerdem ist die Nabe in unmittelbarer Nähe zu einem Rotorlager und damit zu einem Bauteil, das maßgeblich Belastungen auf den aerodynamischen Rotor aufnehmen muss und gegebenenfalls dadurch geschädigt werden kann.

Außerdem kann das Nabenbiegemoment nicht nur absolute Werte, sondern auch gerichtete Werte beinhalten.

Besonders bei einem Sturmfall können nicht nur hohe Windgeschwindigkeiten auftreten, sondern der Wind ist dabei auch regelmäßig nicht homogen. Die Windgeschwindigkeit kann sich nicht nur mit der Zeit schnell ändern, sondern auch mit dem Ort, besonders mit der Höhe. Moderne Windenergieanlagen haben große Rotorflächen und eine über die Rotorfläche variierende Windgeschwindigkeit kann zu ungleichmäßigen Belastungen des Rotors führen. Das kann sich wiederum in einem Nabenbiegemoment wiederspiegeln. Die Windenergieanlage kann auch mitunter durch solche ungleichmäßigen Belastungen stärker belastet oder gefährdet sein, als allein durch eine hohe Windgeschwindigkeit. Somit kommt auch in Betracht, dass die Windgeschwindigkeit als Kriterium einer Belastung der Windenergieanlage nicht sehr aussagekräftig ist, weil eine bestimmte Windgeschwindigkeit abhängig davon, wie und wie stark sie variiert, zu sehr unterschiedlichen Belastungen führen kann, die sich in einem Wert über die Höhe der Windgeschwindigkeit nicht wiederspiegeln.

Durch die Ermittlung einer tatsächlichen Belastungsgröße, besonders eines Nabenbiegemomentes, kann die tatsächliche Belastung besser berücksichtigt werden. Besonders eine ungleichmäßige Belastung über das Rotorfeld kann berücksichtigt werden und es kann gezielter darauf reagiert werden. Besonders kann, bezogen auf einen Windgeschwindigkeitswert, die Drehzahl und/oder die Generatorleistung früher oder später reduziert werden, je nach Windfeld.

Statt der Betrachtung des Nabenbiegemomentes, oder zusätzlich dazu, kann auch ein Wellenbiegemoment, ein Achsenbiegemoment und/oder ein Turmkopfbiegemoment zur Ermittlung der Belastungsgröße oder als Belastungsgröße verwendet werden. Die zum Nabenbiegemoment beschriebenen Erklärungen und Vorteile sind sinngemäß auch auf diese Momente übertragbar.

Gemäß einer Ausführungsform wird vorgeschlagen, dass zum Erfassen der auf die Windenergieanlage wirkenden Kraftgröße, insbesondere zum Erfassen des Nabenbiegemomentes, wenigstens eine Dehnungsmessung an der Rotornabe und außerdem oder alternativ wenigstens an einem Rotorblatt, insbesondere an oder bei der Blattwurzel durchgeführt wird. Vorzugsweise wird an jedem Rotorblatt bzw. an oder bei jeder Blattwurzel eine Dehnungsmessung vorgenommen. Vorzugsweise werden dort jeweils mehrere Dehnungsmessungen vorgenommen, insbesondere jeweils zwei, um dadurch unterschiedliche Belastungsrichtungen aufnehmen zu können.

Dabei wurde erkannt, dass eine solche Belastungsmessung mittels Dehnungsmessungen, also eine Messung jeweils mittels wenigstens eines Dehnungsmessstreifens, auf einfache Weise vorgenommen werden kann und häufig auch für andere Anwendungen benutzt werden kann. Besonders für eine Einzelblattverstellung kann eine solche Dehnungsmessung vorgesehen sein. Hier wird aber vorgeschlagen, die Dehnungsmessung zu verwenden, um daraus eine insgesamt auf die Windenergieanlage wirkende Kraftgröße zu erfassen, die nämlich zur Ermittlung der Belastungsgröße geeignet ist. Es wird hierdurch also eine für die Windenergieanlage insgesamt relevante Belastungsgröße ermittelt, die dann für einen Belastungsbetrieb zum Reduzieren von Drehzahl und Generatorleistung verwendet wird.

Gemäß einer weiteren Ausführungsform ist das Verfahren dadurch gekennzeichnet, dass das Ermitteln der Belastungsgröße mittels eines systemtechnischen Schätzalgorithmus basierend auf einer für die Belastung repräsentativen Messung erfolgt. Dabei können auch mehrere Messungen an mehreren Orten verwendet werden. Unter einer Messung ist dabei im Wesentlichen eine kontinuierliche Messung zu verstehen. Unter einer kontinuierlichen Messung fällt dabei auch eine quasi kontinuierliche Messung, bei der beispielsweise diskret mit einer hohen Abtastrate gemessen wird.

Insbesondere werden Dehnungsmessungen an der Rotornabe und außerdem oder alternativ an der Blattwurzel der Rotorblätter bzw. im Bereich der Blattwurzel der Rotorblätter zugrundegelegt. Ein Ort im Bereich der Blattwurzel ist besonders auf einem Blattadapter, über den das betreffende Rotorblatt an der Nabe befestigt ist. Es werden somit diese Messungen oder zumindest die eine repräsentative Messung als Eingangssignal oder Eingangsgröße für einen solchen Schätzalgorithmus verwendet.

Ein solcher systemtechnischer Schätzalgorithmus kann besonders als Berechnungsvorschrift ausgestaltet sein, die einen Zusammenhang zwischen der jeweiligen Messung und der zu ermittelnden Belastungsgröße kennt. Beispielsweise können mittels Dehnungsmessstreifen Belastungen an den Blattwurzeln gemessen werden. Daraus wird dann mittels des systemtechnischen Schätzalgorithmus das Biegemoment als Belastungsgröße erfasst. Dazu liegt dem Berechnungsalgorithmus, der hier in diesem Beispiel den Schätzalgorithmus bilden kann, ein Zusammenhang zwischen jeweiligen Belastungen an den Blattwurzeln und einem resultierenden Biegemoment, nämlich beispielsweise Nabenbiegemoment zugrunde.

Solche Zusammenhänge können beispielsweise durch repräsentative Messungen aufgenommen werden, wenn in einem Testaufbau Eingangs- und Ausgangsgrößen gemessen werden, hier also die Messungen an den Blattwurzeln als Eingangsgrößen und das resultierende Nabenbiegemoment als Ausgangsgröße, daraus kann bspw. durch bekannte Verfahren der Systemidentifikation ein Systemmodel für diesen Zusammenhang erstellt werden. Es kommt auch in Betracht, dass solche Zusammenhänge über Lastsimulationen ermittelt werden. Bei solchen Lastsimulationen liegen gute Modelle der betroffenen Elemente der Windenergieanlage zugrunde. Beispielsweise können solche Modelle über Verfahren mit finiten Elementen bestimmt werden. Ein Zusammenhang kann für jedes Rotorblatt aufgenommen und berücksichtigt werden. Es ergeben sich dann in diesem Beispiel aus der Belastung jeder Blattwurzel, üblicherweise kann hier von drei Rotorblättern und damit drei Blattwurzeln ausgegangen werden, ein Teilnabenbiegemoment nach Betrag und Richtung. Dieses Teilnabenbiegemoment kann beispielsweise als ein entsprechender Vektor, nämlich Kraftgrößenvektor berücksichtigt oder dargestellt werden. Diese drei Teilnabenbiegemomente, wenn drei Rotorblätter vorliegen, können dann vektoriell zu einem Gesamtnabenbiegemoment aufaddiert werden.

Vorzugsweise kann, um von dem Blattwurzelbiegemoment auf das Nabenmoment zu kommen, auch eine Matrixmultiplikation vorgenommen werden. Eine solche kann aus einem Kräftegleichgewicht hergeleitet werden.

Es kommt aber auch in Betracht, dass noch weitere Kräfte, besonders Gewichtskräfte, zu dem Nabenbiegemoment ergänzt werden. Gegebenenfalls wird hierbei herausgerechnet, soweit eine Gewichtskraft je nach Stellung des Rotorblattes auch auf die jeweils aufgenommene Blattbelastung an der Blattwurzel wirkt. Gemäß einer Variante kann eine solche Gewichtsbelastung jeweils unter Berücksichtigung der Blattstellung in den Zusammenhang zwischen der jeweiligen Belastung an der Blattwurzel und dem resultierenden Teilbiegemoment mit eingehen. Steht also beispielsweise ein Blatt senkrecht nach oben, also in der sogenannten 12-Uhrstellung, und wirkt - als veranschaulichendes Beispiel - kein Wind auf das Rotorblatt, könnte dies bedeuten, dass auch keine Belastung an der Blattwurzel durch Dehnungsmessstreifen erfasst wird. Aus der Stellung des Rotorblattes und seinem Gewicht ist aber bekannt, dass allein dieses Gewicht bereits zu einem Nabenbiegemoment führt und genau das kann mitberücksichtigt werden. Alternativ können die genannten Dehnungsmessstreifen solche Gewichtskräfte mit berücksichtigen.

Dies ist ein bevorzugtes Beispiel, auch im Hinblick auf die verwendeten Messwerte. Es kommt aber beispielsweise auch in Betracht, aus den Belastungen an der Blattwurzel eine gesamte Lagerbelastung zu bestimmen. Es kommt auch in Betracht, eine Bewegung des Turmkopfes zu erfassen und daraus auf eine Belastung am Turmkopf zu schließen.

Gemäß einer weiteren Variante kann der systemtechnische Schätzalgorithmus als Zustandsbeobachter realisiert werden. In diesem Zustandsbeobachter können die repräsentativen Messungen bzw. die wenigstens eine repräsentative Messung als Eingangsgröße eingehen. Der Zustandsbeobachter kann dann ein Modell beinhalten, das beispielsweise als Ausgangsgröße eine Drehzahl hat, die sich unter anderem aus den Belastungen ergibt. Das Modell verhält sich dabei wie die Windenergieanlage. Über den Vergleich des Ausgangs der Drehzahl dieses Beobachters und der tatsächlichen Drehzahl der Windenergieanlage, die regelmäßig mit guter Genauigkeit vorliegt, kann ein Beobachtungsfehler gebildet und zum Einstellen des Beobachters zurückgeführt werden. Wenn bspw. eine Drehzahl durch Verstellen der Blattwinkel ausgeregelt wird, kann das Signal zum Verstellen des Blattwinkels eine weitere Eingangsgröße bilden, die auch in das Modell eingegeben wird. Oder das Blattverstellsignal kann die einzige Eingangsgröße bilden, um ein weiteres Beispiel anzugeben.

Alternativ kann der systemtechnische Schätzalgorithmus bzw. der Zustandsbeobachter als Kalman-Filter realisiert werden.

Gemäß einer weiteren Ausführungsform wird vorgeschlagen, dass der Belastungsgrenzwert in Abhängigkeit einer bei einem Normalbetrieb bei vorherrschendem Nennwind als Basisbelastung erfassten Belastungsgröße festgelegt wird. Es wird also im Normalbetrieb bei vorherrschendem Nennwind, der insoweit auch synonym als Nennbetrieb bezeichnet werden kann, eine Belastung erfasst. Eine solche Belastung kann vorab in Simulationen aufgenommen werden, oder auch im laufenden Betrieb. Abhängig von einer solchen Belastungsmessung kann dann der Belastungsgrenzwert auf einen höheren Wert festgelegt werden, insbesondere auf einen doppelt so hohen Wert. Es können aber auch systemtechnische Voruntersuchungen festlegen, um wie viel größer der Belastungsgrenzwert gegenüber der Basisbelastung ist, die im Nennbetrieb festgestellt wurde.

Das hat den Vorteil, dass systematische Messfehler, die auch zu einer entsprechend falschen Belastungsgröße führen können, weniger problematisch sind, denn erfolgt beispielsweise eine um zwanzig Prozent zu niedrige Ermittlung der Belastungsgröße, tritt dieser Fehler auch beim Bestimmen der Basisbelastung auf. Das führt wiederum dazu, dass auch der Belastungsgrenzwert um entsprechend zwanzig Prozent zu klein angesetzt wird. Es wird dann also eine zu klein ermittelte Belastungsgröße mit einem zu klein ermittelten Belastungsgrenzwert verglichen, so dass das Ergebnis des Vergleichs im Wesentlichen doch korrekt ist.

Vorzugsweise werden die Drehzahl und außerdem oder alternativ die Generatorleistung in Abhängigkeit der erfassten Belastung reduziert. Die ermittelte Belastungsgröße bildet insoweit also eine Eingangsgröße zum Reduzieren der Drehzahl bzw. der Generatorleistung.

Das kann so erfolgen, dass die Belastungsgröße den Belastungsgrenzwert nicht überschreitet. Drehzahl und Generatorleistung werden also mit zunehmender Belastungsgröße reduziert, und zwar so, dass die Belastungsgröße den Belastungsgrenzwert nicht überschreitet. Das kann beispielsweise über eine entsprechende Regelung erfolgen, bei der der Belastungsgrenzwert als Sollwert und die Belastungsgröße als Istwert verwendet wird. Es erfolgt dann ein Soll-Istwert-Vergleich, bei dem von dem Belastungsgrenzwert die Belastungsgröße abgezogen wird, und mittels dieser sogenannten Regelabweichung kann dann ein Regelalgorithmus Drehzahl und Leistung reduzieren.

Insoweit wird auch vorgeschlagen, die Belastungsgröße durch die Reduzierung der Drehzahl und der Generatorleistung auf die Belastungsgrenze zu regeln. Es kann also einmal ein Regler vorgesehen werden, der so ausgestaltet ist, dass die Belastungsgröße den Belastungsgrenzwert nicht überschreitet. Das kann bedeuten, dass die Belastungsgröße auch weit unterhalb des Belastungsgrenzwertes liegen kann. Beispielsweise kann ein Sicherheitsabstand vorgeschlagen werden, und der kann dadurch realisiert werden, dass statt des Belastungsgrenzwertes als Sollwert ein geringerer Wert als der Belastungsgrenzwert verwendet wird, beispielsweise ein um zehn Prozent geringerer Wert.

Für den Fall, dass die Belastungsgröße auf dem Belastungsgrenzwert geregelt wird, wird die Regelung grundsätzlich versuchen, die Drehzahl und die Generatorleistung auch entsprechend zu erhöhen, wenn die Belastungsgröße den Belastungsgrenzwert noch nicht erreicht hat.

Gemäß einer Ausgestaltung wird vorgeschlagen, dass die Drehzahl und die Generatorleistung derart reduziert werden, dass die Belastungsgröße den Belastungsgrenzwert nicht überschreitet und außerdem die Rotorblätter jeweils in ihrem Blattwinkel in Richtung aus dem Wind verstellt werden, und außerdem das Generatormoment ein Generatornennmoment nicht überschreitet und außerdem das Generatormoment mit zunehmender Windgeschwindigkeit reduziert wird.

Durch das Verstellen der Rotorblätter aus dem Wind reduziert sich die Drehzahl, was zu einer Entlastung führt. Zusätzlich verringert sich ein Anströmwinkel auf die Rotorblätter, was ebenfalls zu einer Entlastung führt. Zusätzlich wird vorgesehen, dass das Generatormoment ein Generatornennmoment nicht überschreitet und damit wird eine entsprechende elektrische Überlastung vermieden, es wird aber auch eine zu starke mechanische Belastung durch das Drehmoment vermieden.

Weiter wird vorgeschlagen, dass das Generatormoment mit zunehmender Windgeschwindigkeit reduziert wird, was zu einer Drehzahlerhöhung führen könnte, wenn die Rotorblätter nicht ausreichend aus dem Wind gedreht werden. Da aber außerdem eine Drehzahlreduzierung vorgeschlagen wird, werden die Rotorblätter entsprechend stark aus dem Wind gedreht, dass trotz Reduzierung des Generatormomentes eine Drehzahlreduzierung folgt. Damit einhergehend, dass nämlich das Generatormoment reduziert wird und die Drehzahl reduziert wird, wird auch die Generatorleistung reduziert.

Da eine Windgeschwindigkeit durch herkömmliche Windmessgeräte, besonders durch ein Gondelanemometer, nicht sehr genau erfasst werden kann, kann hier die Schätzung einer Windgeschwindigkeit vorgeschlagen werden. Die Windgeschwindigkeit kann dabei aus dem bekannten Blattwinkel, dem eingestellten Generatormoment und der resultierenden Drehzahl bzw. einer zeitlichen Ableitung der Drehzahl erfasst werden. Zur Verbesserung einer solchen Windgeschwindigkeitsschätzung wird vorgeschlagen, die ermittelte Belastungsgröße zusätzlich zu berücksichtigen. Auch eine solche Schätzung der Windgeschwindigkeit kann durch einen systemtechnischen Schätzalgorithmus vorgenommen werden.

Gemäß einer Ausführungsform wird vorgeschlagen, dass die Drehzahl in Abhängigkeit der ermittelten Belastungsgröße reduziert wird und die Generatorleistung in Abhängigkeit einer Drehzahl-Leistungskennlinie für den Belastungsbetrieb reduziert wird und es wird hierfür vorgeschlagen, dass sich die Drehzahl-Leistungskennlinie für den Belastungsbetrieb von einer Drehzahl-Leistungskennlinie für den Teillastbetrieb unterscheidet. In dem Teillastbetrieb ist der Wind so schwach, dass eine Generatornennleistung nicht erreicht werden kann. Es wird hier also eine spezielle Drehzahl-Leistungskennlinie vorgegeben, und eine solche Drehzahl-Leistungskennlinie gibt einen einzustellenden Leistungswert, also der Wert für die Generatorleistung, für die jeweils aktuelle Drehzahl an. Beispielsweise kann in Abhängigkeit der Belastungsgröße ein Verstellen der Rotorblätter so erfolgen, dass sich die Drehzahl reduziert. Es stellt sich dann eine Drehzahl ein und abhängig dieser Drehzahl wird eine Generatorleistung gemäß der Drehzahl-Leistungskennlinie eingestellt. Es kann dann passieren, dass dies wiederum Einfluss auf die Drehzahl hat. Dann kann sich die Drehzahl verändern und für die veränderte Drehzahl kann dann wieder ein neuer Wert für die Generatorleistung eingestellt werden, bis sich ein stabiler Arbeitspunkt ergibt. Diese Schilderung dient der Erläuterung und üblicherweise führt die geschilderte Regelung dazu, dass die Regelung den Betriebspunkt auf einem stabilen Punkt auf der Drehzahl-Leistungs-Kennlinie führt.

Vorzugsweise werden die Rotorblätter in Abhängigkeit der Belastungsgröße verstellt, vorzugsweise so, dass die Belastungsgröße auf einen festen Wert geregelt wird. Bei ansteigender Windbelastung werden also die Blätter weiter aus dem Wind gedreht, so dass die ermittelte Belastungsgröße im Ergebnis durch die zunehmende Windbelastung nicht steigt.

Die genannte Drehzahl-Leistungskennlinie für den Belastungsbetrieb ist von einer Drehzahl-Leistungskennlinie für den Teillastbetrieb zu unterscheiden. Auch im Teillastbetrieb kann vorgesehen sein, in Abhängigkeit einer Drehzahl jeweils eine Generatorleistung einzustellen. In diesem Fall ist es aber üblich, dass die Rotorblätter einen festen Blattwinkel beibehalten und sich die Drehzahlveränderung allein aus einer Veränderung des Windes ergibt. Eine solche Drehzahl-Leistungskennlinie im Teillastbetrieb kann solange zugrundegelegt werden, bis die Windgeschwindigkeit Nennwindgeschwindigkeit erreicht hat bzw. darüber liegt.

Vorzugsweise wird vorgeschlagen, dass die Drehzahl-Leistungskennlinie für den Belastungsbetrieb zumindest in einem Teildrehzahlbereich, insbesondere in einem Drehzahlbereich von 10 bis 90 Prozent der Nenndrehzahl jeweils einen höheren Leistungswert aufweist, als die Drehzahl-Leistungskennlinie für den Teillastbetrieb. Die Drehzahl-Leistungskennlinie für den Belastungsbetrieb führt also im Wesentlichen zu einer höheren Leistung bei selber Drehzahl gegenüber dem Teillastbetrieb. Nahe der Drehzahl null und nahe der Nenndrehzahl können sich die beiden Drehzahl-Leistungskennlinien angleichen.

Gemäß einer Ausführungsform wird vorgeschlagen, dass zum Einspeisen der elektrischen Generatorleistung der vom Generator erzeugte elektrische Strom gleichgerichtet und einem ersten Gleichspannungszwischenkreis zugeführt wird. Weiter wird vorgeschlagen, dass der gleichgerichtete Strom von dem ersten Gleichspannungszwischenkreis einem zweiten Gleichspannungszwischenkreis zugeführt wird. Dabei ist zwischen dem ersten und zweiten Gleichspannungszwischenkreis ein Hochsetzsteller angeordnet. Dieser Hochsetzsteller setzt gegebenenfalls eine erste Gleichspannung des ersten Gleichspannungszwischenkreises auf eine zweite Spannung des zweiten Gleichspannungszwischenkreises hoch. Weiterhin wird der elektrische Strom des zweiten Gleichspannungszwischenkreises mittels eines Wechselrichters in einen elektrischen Wechselstrom zum Einspeisen in das elektrische Versorgungsnetz gewandelt. Hierfür wird nun vorgeschlagen, dass der Hochsetzsteller die erste Gleichspannung nur für Drehzahlen unterhalb einer Umschaltdrehzahl auf die zweite Gleichspannung hochsetzt, so dass dann die zweite Gleichspannung höher als die erste Gleichspannung ist. Dazu wird schließlich vorgeschlagen, dass die Umschaltdrehzahl im Teillastbetrieb höher liegt, als im Belastungsbetrieb.

Dadurch kann erreicht werden, dass auch die Einspeisung elektrischer Leistung, einschließlich der speziellen Ansteuerung des Hochsetzstellers an einen Sturmbetrieb angepasst ist. Mit anderen Worten wird im Belastungsbetrieb nur ein kleinerer Drehzahlbereich einen Hochsetzstellerbetrieb verwenden. In Bezug auf die Windgeschwindigkeit wird somit im Belastungsbetrieb erst sehr spät, also bei sehr hohen Windgeschwindigkeiten auf den Hochsetzstellerbetrieb umgeschaltet.

Gemäß einer Ausführungsform wird vorgeschlagen, dass das Nabenbiegemoment in Abhängigkeit der Rotorposition zwischen maximalen und minimalen Nabenbiegemomenten variiert und dazu wird vorgeschlagen, dass die Belastungsgröße in Abhängigkeit der maximalen Nabenbiegemomente ermittelt wird. Hierbei werden also die geringeren Nabenbiegemomente verworfen und es werden nur die maximalen Nabenbiegemomente ermittelt. Dadurch kann sichergestellt werden, dass auch tatsächlich die großen Nabenbiegemomente, die letztlich am kritischsten sind, Berücksichtigung finden.

Außerdem oder alternativ wird vorgeschlagen, dass die Belastungsgröße in Abhängigkeit von Differenzen zwischen den maximalen und den minimalen Nabenbiegemomenten ermittelt werden. In diesem Fall kommt als eine Variante in Betracht, dass allein diese Differenzen die Belastungsgröße bestimmen. Hier wird besonders berücksichtigt, dass bei starken Belastungen durch die Drehung des Rotors auch die Lastschwankungen zunehmen. Beispielsweise können solche Variationen der Nabenbiegemomente dadurch erzeugt werden, dass das jeweilige Rotorblatt beim Turmdurchgang, wenn sich das Rotorblatt also am Turm vorbeidreht, eine starke Belastungsschwankung erfährt, die mit zunehmender Windgeschwindigkeit auch zunimmt. Auch mit der Höhe variierende Windgeschwindigkeit kann der Grund für Variationen der Nabenbiegemomente, oder anderer Belastungsgrößen sein. Es kommt für die Berücksichtigung auch in Betracht, solche Belastungsschwankungen, also die Differenzen zwischen maximalen und minimalen Nabenbiegemoment ergänzend mit absoluten Werten des Nabenbiegemomentes zur Bestimmung der Belastungsgröße zu verwenden.

Außerdem oder alternativ können als Belastungsgröße jeweils die maximalen Nabenbiegemomente betrachtet werden. Die Belastungsgröße wird also nicht indirekt in Abhängigkeit der maximalen Nabenbiegemomente bestimmt, sondern die maximalen Nabenbiegemomente bilden unmittelbar jeweils die Belastungsgröße. Dabei kann die Belastungsgröße natürlich zur Verarbeitung im Prozessrechner skaliert werden.

Gemäß einer weiteren Variante wird vorgeschlagen, dass als Belastungsgröße jeweils die Differenzen zwischen dem maximalen und minimalen Nabenbiegemomenten betrachtet werden. Auch hier bilden diese Differenzen also nicht nur Ausgangsgrößen, um eine solche Belastungsgröße zu bestimmen, sondern diese Differenzen werden unmittelbar als Belastungsgröße verwendet. Auch hier kommt natürlich eine Skalierung in Betracht.

Erfindungsgemäß wird auch eine Windenergieanlage zum Erzeugen elektrischer Leistung aus Wind vorgeschlagen. Eine solche Windenergieanlage umfasst einen aerodynamischen Rotor mit einer Rotornabe und Rotorblättern, die in ihrem Blattwinkel verstellbar sind. Der Rotor ist zudem mit einer variablen Drehzahl betreibbar. Weiterhin weist sie einen mit dem aerodynamischen Rotor gekoppelten Generator auf, mit dem eine Generatorleistung erzeugt wird. Der Generator ist mit einem variablen Generatormoment betreibbar. Das Generatormoment kann unter anderem dadurch variiert werden, dass ein Erregerstrom variiert wird. Insoweit wird hier besonders eine fremderregte Synchronmaschine vorgesehen.

Weiterhin ist eine Erfassungseinrichtung zum Ermitteln einer Belastungsgröße vorgesehen, nämlich eine Belastungsgröße, die eine Belastung der Windenergieanlage durch den Wind angibt. Die Erfassungseinrichtung arbeitet also so, dass sie beispielsweise aus Messungen oder einer Messung eine solche Belastungsgröße ermittelt und diese Belastungsgröße ist dann repräsentativ für eine Belastung. Die Belastungsgröße gibt dann beispielsweise je nach ihrem Wert an, wie stark die Windenergieanlage durch den Wind belastet ist. Außerdem ist eine Steuereinrichtung vorgesehen, die dazu vorbereitet ist, die Drehzahl und/oder die Generatorleistung in einem Belastungsbetrieb zu reduzieren. Ein solcher Belastungsbetrieb ist einer, bei dem die Belastungsgröße einen vorbestimmbaren Belastungsgrenzwert erreicht. Das kann auch den Fall beinhalten, wenn die Belastungsgröße den vorbestimmbaren Belastungsgrenzwert überschreitet. Das kann eine Definition für den Belastungsbetrieb sein. Es kommt aber auch in Betracht, dass der Belastungsgrenzwert einen Orientierungswert für die Belastungssituation bildet, dessen Überschreiten auch vorgesehen sein kann.

Somit kann zunächst darauf erkannt werden, ob ein Belastungsbetrieb vorliegt. Liegt er vor, kann dann die Steuereinrichtung das Reduzieren der Drehzahl und der Generatorleistung steuern. Das kann beispielsweise so erfolgen, dass Stellsignale zum Verstellen der Rotorblätter ausgegeben werden, so dass der aerodynamische Rotor weniger Windleistung aufnimmt, wodurch sich die Drehzahl und damit auch die Generatorleistung verringern kann. Das kann steuerungstechnisch so umgesetzt sein, dass dafür eine verringerte Solldrehzahl vorgegeben wird.

Außerdem ist die Erfassungseinrichtung dazu vorbereitet, zur Ermittlung der Belastungsgröße oder als Belastungsgröße eine auf die Windenergieanlage wirkende Kraftgröße zu verwenden. Entsprechend kann die Erfassungseinrichtung Informationen zu einer solchen Kraftgröße aufnehmen. Solche Informationen können dazu verarbeitet werden, eine solche Kraftgröße zu ermitteln. Abhängig einer solchen Kraftgröße kann dann die Belastungsgröße ermittelt werden. Alternativ kann diese Kraftgröße bereits die Belastungsgröße darstellen. Es kommt aber auch in Betracht, mehrere auf die Windenergieanlage wirkende Kräfte zu verwenden. Daraus kann dann die Belastungsgröße ermittelt werden.

Selbst die Verwendung mehrerer auf die Windenergieanlage wirkende Kräfte als Belastungsgröße kommt in Betracht, wenn die Belastungsgröße beispielsweise vektoriell ist und dadurch mehrere Kräfte, beispielsweise eine Längs- und eine Querkraft, beinhalten kann.

Vorzugsweise ist die Windenergieanlage zum Ausführen eines Verfahrens gemäß wenigstens einer vorstehend beschriebenen Ausführungsform vorbereitet. Insbesondere können dazu entsprechende Verfahrensschritte, besonders Verfahrensschritte zum Steuern auf der Steuereinrichtung, implementiert sein. Außerdem oder alternativ können Verfahrensschritte, insbesondere Verfahrensschritte zum Ermitteln der Belastungsgröße in der Erfassungseinrichtung implementiert sein.

Es kommt auch in Betracht, dass die Windenergieanlage entsprechende Hardware aufweist, insbesondere Messmittel zum Erfassen physikalischer Größen, insbesondere elektrischer und/oder mechanischer Größen.

Gemäß einer Ausführungsform wird vorgeschlagen, dass für die Windenergieanlage zum Erfassen der auf die Windenergieanlage wirkenden Kraftgröße bzw. zum Erfassen des Nabenbiegemomentes wenigstens ein Kraftmessmittel vorgesehen ist. Zudem ist wenigstens eine Verbindung von dem wenigstens einen Kraftmessmittel zu der Erfassungseinrichtung vorgesehen, um Messwerte des wenigstens einen Kraftmessmittels an die Erfassungseinrichtung zu übertragen, um dann abhängig dieser Messwerte die Belastungsgröße zu ermitteln. Mit den Kraftmessmitteln können also entsprechende Kraftgrößen gemessen werden und die Ergebnisse an die Erfassungseinrichtung übertragen werden. Die Erfassungseinrichtung kann dann daraus die Belastungsgröße ermitteln. Als Verbindung von dem wenigstens einen Kraftmessmittel zur Erfassungseinrichtung sind entsprechende Leitungen, insbesondere elektrische Leitungen, vorgesehen. Die können auch als Datenbus oder Signalbus ausgebildet sein. Grundsätzlich kommt aber auch in Betracht, dass zumindest abschnittsweise eine Funkverbindung verwendet wird. Besonders die Übertragung über eine Drehverbindung hinweg kann über Funk, optisch oder beispielsweise über einen Schleifring oder eine Kombination aus diesen Möglichkeiten erfolgen. Auch eine optische Übertragung kommt dort in Betracht.

Insbesondere wird vorgeschlagen, dass das wenigstens eine Kraftmessmittel einen Dehnungsmessstreifen an der Rotornabe und/oder an jedem Rotorblatt bzw. an oder bei jeder Blattwurzel umfasst. Insbesondere bilden solche Dehnungsmessstreifen die Kraftmessmittel.

Die Windenergieanlage kann also mit diesen Kraftmessmitteln, besonders mit dem Dehnungsmessstreifen entsprechende Kräfte aufnehmen und daraus dann in der Erfassungseinrichtung die Belastungsgröße ermitteln. Die Belastungsgröße ist dann unmittelbar von solchen mechanischen Messungen abhängig. Es werden hier also tatsächlich auftretende Kräfte ausgewertet, um daraus die Belastungsgröße zu ermitteln. Die Belastungsgröße ist dann zwar möglicherweise ein vereinfachter oder zusammengefasster Wert, oder auch Kraftvektor, beruht aber auf Kraftmessungen und beruht daher auf tatsächlichen mechanischen Belastungen.

Ein Belastungsbetrieb ist insoweit ein Betrieb, auf den umgestellt wird, wenn der Wind so stark ist, dass zum Schutz der Windenergieanlage die Drehzahl und die Generatorleistung reduziert werden müssen. Ein solcher Belastungsbetrieb kann in Abhängigkeit der Belastungsgröße ausgelöst werden, wenn die Belastungsgröße also beispielsweise einen Belastungsauslösegrenzwert überschreitet, der mit dem Belastungsgrenzwert identisch sein kann, oder einen anderen Wert aufweist, insbesondere einen niedrigeren. Der Belastungsbetrieb kann aber auch anderweitig eingeschaltet werden, beispielsweise in Abhängigkeit einer erfassten Windgeschwindigkeit. Auch in Abhängigkeit eines Blattwinkels kann ein solcher Belastungsbetrieb eingeschaltet werden. Als Kriterium kommt auch in Betracht, solche Größen zu kombinieren. Besonders die Auswertung der Belastungsgröße und eines Blattwinkels kommt in Betracht.

Nachfolgend wird die Erfindung exemplarisch anhand von Ausführungsbeispielen unter Bezugnahme auf die begleitenden Figuren näher erläutert:
- Figur 1: zeigt eine Windenergieanlage in einer perspektivischen Darstellung.
- Figur 2: zeigt eine veranschaulichende Struktur zum Erfassen eines Nabenbiegemomentes als Belastungsgröße.
- Figur 3: zeigt eine Struktur zum Reduzieren der Drehzahl und der Generatorleistung in einem Belastungsbetrieb.

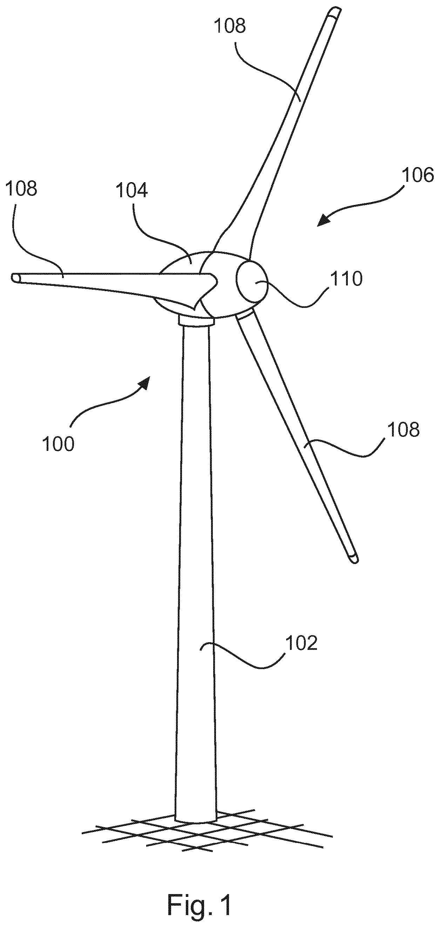

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

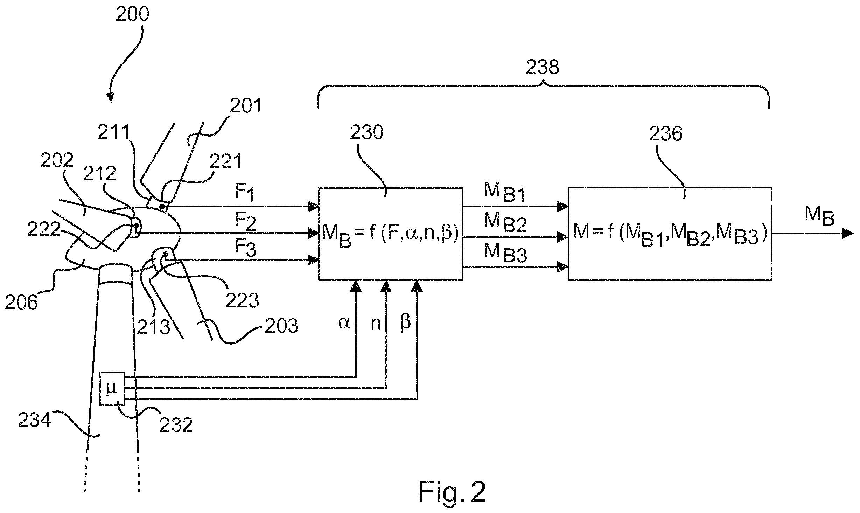

Figur 2 zeigt symbolisch einen Teil einer Windenergieanlage 200. Diese Windenergieanlage 200 weist drei Rotorblätter 201, 202 und 203 auf. Diese sind an einer Nabe befestigt, die in der Gondel 206 angeordnet ist. Daran sind die drei Rotorblätter 201, 202 und 203 jeweils über eine Blattwurzel 211, 212 bzw. 213 befestigt. An jeder Blattwurzel 211 bis 213 ist als Kraftmessmittel jeweils ein Dehnungsmessstreifen 221, 222 bzw. 223 angeordnet. Die Figur 2 zeigt für jede Blattwurzel 211 bis 213 jeweils einen Dehnungsmessstreifen 221 bis 223. Vorzugsweise sind aber wenigstens zwei um 90 Grad zueinander versetzte Dehnungsmessstreifen für jede Blattwurzel vorzusehen. Jedenfalls wird mit jedem Dehnungsmessstreifen 221 bis 223 jeweils eine Kraftgröße F₁, F₂ bzw. F₃ ermittelt. Diese Kraftgrößen können hier Biegemomente sein, die sich aus Messwerten jeweils eines Dehnungsmessstreifens ergeben. Diese drei Kraftgrößen F₁ bis F₃ werden in den Erfassungsblock 230 eingegeben. Dabei können die Kraftgrößen F₁ bis F₃ jeweils auch vektorielle Größen sein, die die entsprechenden Kräfte an der jeweiligen Blattwurzel 211 bis 213 nach Betrag und Richtung angeben. Diese so erfassten Kraftgrößen F₁ bis F₃ werden somit zunächst in dem Erfassungsblock 230 erfasst.

Zusätzlich werden in den Erfassungsblock 230 ein Blattwinkel α, eine Drehzahl n und eine Rotorposition β eingegeben. Im Falle einer Einzelblattverstellung, wenn es also möglich ist, die Rotorblätter individuell zu verstellen, nämlich jedes einzelne Rotorblatt unabhängig von den beiden anderen Rotorblättern, können statt des einen Blattwinkels α auch die drei einzelnen Blattwinkel α₁, α₂ und α₃ aufgenommen werden.

Zum Aufnehmen dieser Größen, nämlich des einen oder mehreren Blattwinkels α, der Rotordrehzahl n und der Rotorposition β ist ein Betriebssteuerblock 232 veranschaulichend dargestellt. Die Verwendung dieses Betriebssteuerblocks 232 soll besonders auch veranschaulichen, dass die genannten Größen grundsätzlich in der Betriebssteuerung der Windenergieanlage 200 bekannt sind. Insoweit brauchen diese Größen nur aus der Betriebssteuerung, für die hier der Betriebssteuerblock 232 symbolisch dargestellt ist, entnommen zu werden. Der Betriebssteuerblock 232 ist nur zum Zwecke der Veranschaulichung in einem oberen Bereich des Turmes 234 angeordnet. Üblicherweise kann aber die Betriebssteuerung, und damit auch ein solcher Betriebssteuerblock 232, in der Gondel 206 angeordnet sein, und dort unmittelbar diese Größen aus einer Gesamtbetriebssteuerung erhalten.

Jedenfalls berechnet der Erfassungsblock 230 aus den Größen, die bei ihm eingegeben werden, jeweils eine Nabenbiegemomentkomponente M_{B1}, M_{B2} und M_{B3}. Diese Nabenbiegemomentkomponenten M_{B1}, M_{B2} und M_{B3} sind jeweils auf die erfassten Kraftgrößen F₁, F₂ bzw. F₃ zurückzuführen. Mit anderen Worten wird jeweils aus einer Kraftgröße F₁, F₂ oder F₃ eine Nabenbiegemomentkomponente M_{B1}, M_{B2} bzw. M_{B3} berechnet, die auch als Blattwurzelbiegemomente bezeichnet werden können, und für diese Berechnung werden außerdem die Größen α, n und β, also der Blattwinkel α, die Rotordrehzahl n und die Rotorposition β berücksichtigt. Das erste Zwischenergebnis dieses Erfassungsblocks 230 sind somit diese drei Nabenbiegemomentkomponenten M_{B1} bis M_{B3}, die besonders auch jede für sich als Vektor dargestellt sein kann. Jedes dieser Nabenbiegemomentkomponenten M_{B1} bis M_{B3} ist somit vorzugsweise nicht nur ein einzelner skalarer Wert, sondern ein Vektor, der Amplitude und Richtung angibt. Diese drei Größen werden dann in dem Zusammenführungsblock 236 zu einer einzigen Belastungsgröße zusammengeführt, nämlich am Beispiel der Figur 2 zu einem gemeinsamen Nabenbiegemoment M_{B}. Dieses gemeinsame Nabenbiegemoment M_{B} kann beispielsweise eine vektorielle Summe der drei Einzelvektoren M_{B1}, M_{B2} und M_{B3} sein, wenn diese Einzelnabenbiegemomentkomponenten M_{B1} bis M_{B3} jeweils Vektoren sind. Wenn diese Berechnung nur von den Beträgen ausgeht, kann in dem Zusammenführungsblock 236 beispielsweise eine Mittelwertbildung durchgeführt werden, um nur ein weiteres Beispiel zu nennen.

Jedenfalls veranschaulicht Figur 2, wie aus den Kraftmessungen an den Blattwurzeln 211 bis 213 mittels der Dehnungsmessstreifen 221 bis 223 eine einzelne Belastungsgröße, hier nämlich Nabenbiegemoment M_{B} ermittelt werden kann.

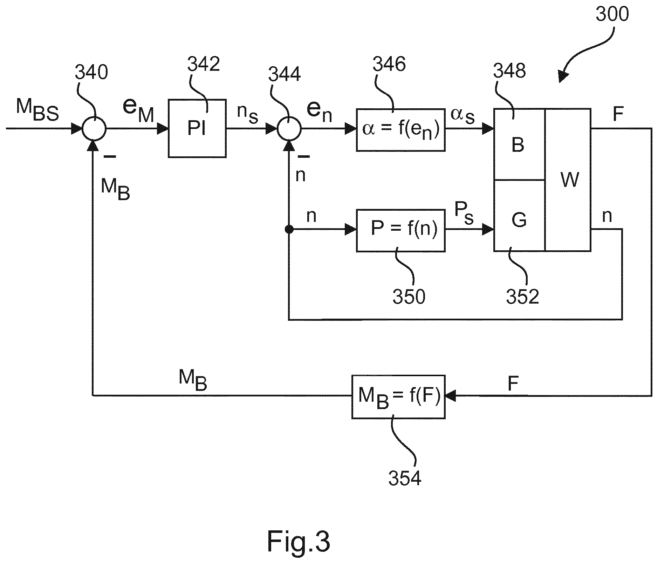

Zur Steuerung der Windenergieanlage in einem Belastungsbetrieb wird dann das wie in Figur 2 veranschaulicht ermittelte Nabenbiegemoment M_{B} beispielsweise gemäß einer Struktur gemäß Figur 3 verwendet.

Im Übrigen kann auch die Dehnung gemessen werden, und dann über eine gewichtsbasierte Kalibrierung auf Blattwurzelbiegemomente geschlossen werden. Das kann auch alternativ in dem Erfassungsblock 230 durchgeführt werden.

In der Regelungsstruktur gemäß Figur 3 ist vorgesehen, dass das ermittelte Nabenbiegemoment M_{B} von einem Sollwert für das Nabenbiegemoment M_{BS} in dem Summierglied 340 abgezogen wird. Das Ergebnis ist ein Regelfehler, der hier als Regelabweichung nämlich Momentenregelabweichung e_{M} bezeichnet wird. Diese Momentenregelabweichung e_{M} wird dann in einen Pl-Regelungsblock 342 eingegeben und dieser PI-Regelungsblock 342 gibt als Ergebnis eine Solldrehzahl n_{S} aus.

Von dieser so ermittelten Solldrehzahl n_{S} wird dann in dem Drehzahlsummierglied 344 die aktuelle Drehzahl der Windenergieanlage 300 abgezogen. Das Ergebnis ist die Drehzahlregelabweichung eₙ. Diese wird in einen Winkelbestimmungsblock 346 eingegeben, der daraus einen einzustellenden Blattwinkel α_{S} bestimmt. Insoweit ist dieser Blattwinkel α_{S} ein Sollwert und wird zur entsprechenden Umsetzung für die Blattverstellung in die Windenergieanlage 300 eingegeben.

Als Windenergieanlage 300 ist hier nur sehr schematisch als entsprechender Block eingezeichnet, der unterteilt ist in einen Blattwinkelbereich B, einen Generatorbereich G und die übrige Windenergieanlage W. Der Sollwinkel α_{S} wirkt somit auf den Blattbereich 348.

Gleichzeitig wird die Drehzahl n in den Leistungsblock 350 eingegeben, der daraus eine Sollleistung P_{S} bestimmt, die in den Generatorbereich 352 eingegeben wird.

Besonders diese beiden Werte, nämlich der Blattsollwinkel α_{S} und die Sollleistung P_{S} bilden nun für diese Betrachtung die Eingangsgrößen für die Windenergieanlage 300. Vorsorglich wird darauf hingewiesen, dass hier von nur einem Blattwinkel α_{S} ausgegangen wird. Es kommt natürlich auch in Betracht, dass individuelle Blattwinkel eingestellt werden. Für diesen Fall kann der Blattwinkel α_{S}, der hier den Ausgang des Winkelbestimmungsblocks 346 bildet, als Grundwinkel betrachtet werden, der um etwaige individuelle Verstellungen der einzelnen Winkel jeweils entsprechend ergänzt werden kann.

Jedenfalls ist das Ergebnis der Windenergieanlage 300 zumindest eine Kraftgröße F, die hier aus den drei Einzelkräften F₁, F₂ und F₃ gemäß der Veranschaulichung der Figur 2 zusammengesetzt sein kann. Diese Kraftgröße F geht dann in die Erfassungseinrichtung 354 ein. Die Erfassungseinrichtung 354 kann sich beispielsweise aus dem Erfassungsblock 230 und dem Zusammenführungsblock 236 gemäß Figur 2 zusammensetzen. Insoweit können auch die beiden Blöcke, nämlich der Erfassungsblock 230 und der Zusammenführungsblock 236 als Erfassungseinrichtung 238 bezeichnet werden.

Jedenfalls funktioniert zusammengefasst die Struktur der Figur 3 wie folgt. Im Belastungsbetrieb arbeitet diese Struktur gemäß Figur 3 überhaupt erst. Hier erfolgt dann im Grunde ein belastungsabhängiges Ausregeln so, dass das Nabenbiegemoment M_{B} auf den Sollwert des Nabenbiegemomentes M_{BS} ausgeregelt wird. Es erfolgt so, dass die Momentenregelabweichung e_{M} durch den PI-Regler gemäß dem Pl-Regelungsblock 342 zu einer Solldrehzahl führt. Hat also das Nabenbiegemoment M_{B} genau seinen Sollwert M_{BS} erreicht, ist die Regelabweichung null und die Solldrehzahl wird dann aufgrund des integralen Anteils in dem PI-Reglerblock 342 auf seinen letzten Wert gehalten.

Die Umsetzung dieser Solldrehzahl in eine Istdrehzahl erfolgt durch die Regelschleife, die durch den Soll-Istwertvergleich in dem Drehzahlsummierglied 344 beginnt. Das Ergebnis dieses Soll-Istwertvergleichs, nämlich die Drehzahlregelabweichung eₙ, wird dann über den Winkelsteuerungsblock 346 in einen entsprechenden Winkel umgesetzt, nämlich zunächst als Sollwert, der dann tatsächlich in dem Blattbereich 348 umgesetzt wird.

Gleichzeitig wird aber in Abhängigkeit der Drehzahl gemäß einer Kennlinie eine Leistung, nämlich eine Generatorleistung vorgegeben. Entsprechend ist eine solche drehzahlabhängige Leistungskennlinie in dem Leistungsblock 350 hinterlegt. Entsprechend gibt der Leistungsblock 350 einen Sollwert für die Leistung aus und dieser Sollwert P_{S} wird in dem Generatorbereich 352 umgesetzt. Führt dies zu einer Leistungsänderung, kann sich auch die Drehzahl ändern und dann wird die Leistung gemäß der Kennlinie und damit durch den Leistungsblock 350 nachgeregelt.

Nimmt hierdurch die Leistung ab, nimmt damit auch das Generatormoment ab, was wiederum zu einer Drehzahlerhöhung führen kann. Dem wird in der Drehzahlregelung besonders durch den Winkelbestimmungsblock 346 entgegengewirkt, indem der Blattwinkel dann reduziert wird. Das wiederum kann aber auch zu einer Belastungsänderung und damit zu einer Änderung der Kraftgröße F führen. Entsprechend kann sich das Nabenbiegemoment M_{B} dann ändern und dies kann über die Momentenregelabweichung e_{M} und dem PI-Regelungsblock 342 zu einer Änderung der Solldrehzahl führen.

Jedenfalls führt diese Struktur dazu, dass bei einer Erhöhung des Nabenbiegemomentes, dem dadurch entgegengeregelt wird, dass zunächst die Drehzahl gesenkt wird und davon abhängig aufgrund einer Kennlinie in dem Leistungsblock 350 auch die Leistung nachgeführt, nämlich reduziert wird.

## Patentansprüche

1. Verfahren zum Betreiben einer Windenergieanlage (200) zum Erzeugen elektrischer Leistung aus Wind, wobei
- die Windenergieanlage (200) einen aerodynamischen Rotor mit einer Rotornabe und in ihrem Blattwinkel (α) verstellbaren Rotorblättern (201, 202, 203) aufweist und der aerodynamische Rotor mit einer variablen Drehzahl betreibbar ist, und
- die Windenergieanlage (200) einen mit dem aerodynamischen Rotor gekoppelten Generator aufweist, zum Erzeugen einer Generatorleistung, wobei
- der Generator mit einem variablen Generatormoment betreibbar ist, umfassend die Schritte:
- Ermitteln einer Belastungsgröße auf die Windenergieanlage (200), die eine Belastung der Windenergieanlage (200) durch den Wind angibt
- Wechseln in einen Belastungsbetrieb, wenn die Belastungsgröße einen Belastungsgrenzwert erreicht oder überschreitet, und
- Reduzieren der Drehzahl und/oder der Generatorleistung in dem Belastungsbetrieb, wobei das Verfahren durch die Schritte gekennzeichnet ist
- Erfassen der Messwerte von Dehnungsmessstreifen (221,222,223), die an allen Blattwurzeln (211-213) der Rotorblätter angeordnet sind, als vektorielle Kraftgrößen (F₁-F₃),
- Berechnen einer vektoriellen Nabenbiegemomentkomponente (M_{B1},M_{B2},M_{B3}) für jedes Rotorblatt.
- vektorielles Summieren der vektoriellen Nabenbiegemomentkomponenten (M_{B1},M_{B2},M_{B3}) zu einem gemeinsamen Nabenbiegemoment (M_{B}), um die Belastungsgröße zu bilden.

2. Verfahren nach Anspruch 1, **dadurch gekennzeichnet, dass** das Ermitteln der Belastungsgröße mittels eines systemtechnischen Schätzalgorithmus basierend auf wenigstens einer für die Belastung repräsentativen Messung erfolgt, basierend auf einer Dehnungsmessung an der Rotornabe.

3. Verfahren nach Anspruch 1 oder 2, **dadurch gekennzeichnet, dass** der Belastungsgrenzwert in Abhängigkeit einer bei einem Normalbetrieb bei vorherrschendem Nennwind als Basisbelastung erfassten Belastungsgröße festgelegt wird, insbesondere so, dass der Belastungsgrenzwert wenigstens auf einen doppelten Wert der Basisbelastung festgelegt wird.

4. Verfahren nach einem der vorstehenden Ansprüche, **dadurch gekennzeichnet, dass** die Drehzahl und/oder die Generatorleistung in Abhängigkeit der erfassten Belastung so reduziert werden, dass
- die Belastungsgröße den Belastungsgrenzwert nicht überschreitet und/oder dass
- die Belastungsgröße durch die Reduzierung der Drehzahl und der Generatorleistung auf die Belastungsgrenze als Sollwert oder geringeren Wert als Sollwert geregelt wird.

5. Verfahren nach einem der vorstehenden Ansprüche, **dadurch gekennzeichnet, dass** die Drehzahl und die Generatorleistung derart reduziert werden, dass
- die Belastungsgröße den Belastungsgrenzwert nicht überschreitet,
- die Rotorblätter (201, 202, 203) jeweils in ihrem Blattwinkel (α) in Richtung aus dem Wind verstellt werden,
- das Generatormoment ein Generatornennmoment nicht überschreitet und
- das Generatormoment mit zunehmender Windgeschwindigkeit reduziert wird.

6. Verfahren nach einem der vorstehenden Ansprüche, **dadurch gekennzeichnet, dass**
- die Drehzahl in Abhängigkeit der ermittelten Belastungsgröße reduziert wird und
- die Generatorleistung in Abhängigkeit einer Drehzahl-Leistungs-Kennlinie für den Belastungsbetrieb reduziert wird und wobei
- sich diese Drehzahl-Leistungs-Kennlinie für den Belastungsbetrieb von einer Drehzahl-Leistungs-Kennlinie für den Teillastbetrieb unterscheidet, in dem der Wind so schwach ist, dass eine Generatornennleistung nicht erreicht werden kann.

7. Verfahren nach Anspruch 6, **dadurch gekennzeichnet, dass** die Drehzahl-Leistungs-Kennlinie für den Belastungsbetrieb zumindest in einem Teildrehzahlbereich, insbesondere in einem Drehzahlbereich von 10% bis 90% der Nenndrehzahl jeweils einen höheren Leistungswert aufweist als die Drehzahl-Leistungs-Kennlinie für den Teillastbetrieb.

8. Verfahren nach einem der vorstehenden Ansprüche, **dadurch gekennzeichnet, dass** zum Einspeisen der elektrischen Generatorleistung
- der vom Generator erzeugte elektrische Strom gleichgerichtet und einem ersten Gleichspannungszwischenkreis zugeführt wird,
- der gleichgerichtete Strom von dem ersten Gleichspannungszwischenkreis einem zweiten Gleichspannungszwischenkreis zugeführt wird, wobei
- zwischen dem ersten und zweiten Gleichspannungszwischenkreis ein Hochsetzsteller angeordnet ist, um ggf. eine erste Gleichspannung des ersten Gleichspannungszwischenkreises auf eine zweite Spannung des zweiten Gleichspannungszwischenkreises hochzusetzen,
- der elektrische Strom des zweiten Gleichspannungszwischenkreises mittels eines Wechselrichters in einen elektrischen Wechselstrom zum Einspeisen in das elektrische Versorgungsnetz gewandelt wird, wobei
- der Hochsetzsteller die erste Gleichspannung nur für Drehzahlen unterhalb einer Umschaltdrehzahl auf die zweite Gleichspannung hochsetzt, so dass dann die zweite Gleichspannung höher ist als die erste Gleichspannung und
- die Umschaltdrehzahl im Teillastbetrieb höher liegt als im Belastungsbetrieb.

9. Windenergieanlage (200) zum Erzeugen elektrischer Leistung aus Wind, umfassend
- einen aerodynamischen Rotor mit einer Rotornabe und in ihrem Blattwinkel (α) verstellbaren Rotorblättern, wobei der aerodynamische Rotor mit einer variablen Drehzahl betreibbar ist,
- einen mit dem aerodynamischen Rotor gekoppelten Generator, zum Erzeugen einer Generatorleistung, wobei der Generator mit einem variablen Generatormoment betreibbar ist,
- eine Erfassungseinrichtung zum Ermitteln einer Belastungsgröße auf die Windenergieanlage (200), die eine Belastung der Windenergieanlage (200) durch den Wind angibt, wobei die Erfassungseinrichtung zur Ermittlung der Belastungsgröße vorbereitet ist,
- ein Dehnungsmessstreifen (221, 222, 223) an der Rotornabe zum Erfassen eines Nabenbiegemomentes vorgesehen ist, das in Abhängigkeit der Rotorposition (β) zwischen maximalen und minimalen Nabenbiegemomenten variiert,
- wenigstens eine Verbindung von dem Dehnungsmessstreifen (221, 222, 223) und der Erfassungseinrichtung vorgesehen ist, um Messwerte des Dehnungsmessstreifens an die Erfassungseinrichtung zu übertragen,
- eine Steuereinrichtung, vorbereitet zum Reduzieren der Drehzahl und/oder der Generatorleistung in einem Belastungsbetrieb, wenn die Belastungsgröße einen Belastungsgrenzwert erreicht,
**dadurch gekennzeichnet, dass**
- dass die Erfassungseinrichtung einen Erfassungsblock (230) und einen Zusammenführungsblock (236) umfasst,
- dass der Erfassungsblock (230) die Messwerte der Dehnungsmessstreifen (221,222,223) aller Rotorblätter als vektorielle Kraftgrößen (F₁-F₃) erfasst und für jedes Rotorblatt eine vektorielle Nabenbiegemomentkomponente (M_{B1},M_{B2},M_{B3}) berechnet, und
- dass der Zusammenführungsblock (236) die vektoriellen Nabenbiegemomentkomponenten (M_{B1},M_{B2},M_{B3}) zu einem gemeinsamen Nabenbiegemoment (M_{B}) vektoriell summiert, welches die Belastungsgröße bildet.

10. Windenergieanlage (200) nach Anspruch 9, **dadurch gekennzeichnet, dass** sie zum Ausführen eines Verfahrens nach einem der Ansprüche 1 bis 8 vorbereitet ist.

## Claims

1. A method for operating a wind turbine (200) for generating electrical power from wind, wherein
- the wind turbine (200) has an aerodynamic rotor with a rotor hub and rotor blades (201, 202, 203) of which the blade angle (α) is adjustable, and the aerodynamic rotor can be operated at a variable rotation speed, and
- the wind turbine (200) has a generator, which is coupled to the aerodynamic rotor, for the purpose of generating a generator power, wherein
- the generator can be operated with a variable generator torque, comprising the steps of:
- determining a loading variable on the wind turbine (200), which indicates a load on the wind turbine (200) due to the wind,
- changing to a loading mode when the loading variable reaches or exceeds a loading limit value, and
- reducing the rotation speed and/or the generator power in a loading mode, wherein the method is charactereized by the steps of
- detecting the measured values of strain gauges (221, 222, 223), which are arranged at all blade roots (211-213) of the rotor blades, as vectorial force variables (F1-F3),
- calculating a vectorial hub bending moment component (M_{B1},M_{B2},M_{B3}) for each rotor blade,
- vectorial summation of the vectorial hub bending moment components (M_{B1},M_{B2},M_{B3}) to form a common hub bending moment (M_{B}) to form the loading variable.

2. The method as claimed in claim 1, **characterized in that** the process of determining the loading variable is performed by means of a system-related estimation algorithm based on at least one measurement which is representative of the loading, based on a strain measurement on the rotor hub.

3. The method as claimed in claim 1 or 2, **characterized in that** the loading limit value is defined depending on a loading variable which is detected as the base loading during normal operation with nominal wind prevailing, in particular such that the loading limit value is defined at least at twice the value of the base loading.

4. The method as claimed in one of the preceding claims, **characterized in that** the rotation speed and/or the generator power are reduced depending on the detected loading in such a way that
- the loading variable does not exceed the loading limit value, and/or that
- the loading variable is controlled by reducing the rotation speed and the generator power to the loading limit as the setpoint value or to a lower value than the setpoint value.

5. The method as claimed in one of the preceding claims, **characterized in that** the rotation speed and the generator power are reduced in such a way that
- the loading variable does not exceed the loading limit value,
- the blade angle (α) of each of the rotor blades (201, 202, 203) is adjusted in the direction away from the wind,
- the generator torque does not exceed a generator nominal torque, and
- the generator torque is reduced as the wind speed increases.

6. The method as claimed in one of the preceding claims, **characterized in that**
- the rotation speed is reduced depending on the determined loading variable and
- the generator power is reduced depending on a rotation speed/power characteristic curve for the loading mode, and wherein
- this rotation speed/power characteristic curve for the loading mode differs from a rotation speed/power characteristic curve for the partial-load mode in which the wind is so weak that a generator nominal power cannot be reached.

7. The method as claimed in claim 6, **characterized in that** the rotation speed/power characteristic curve for the loading mode, at least in a partial rotation speed range, in particular in a rotation speed range of from 10% to 90% of the nominal rotation speed, in each case has a higher power value than the rotation speed/power characteristic curve for the partial-load mode.

8. The method as claimed in one of the preceding claims, **characterized in that**, for feeding-in the electrical generator power,
- the electric current that is generated by the generator is rectified and supplied to a first DC voltage intermediate circuit,
- the rectified current is supplied from the first DC voltage intermediate circuit to a second DC voltage intermediate circuit, wherein
- a boost converter is arranged between the first and the second DC voltage intermediate circuit in order to optionally boost a first DC voltage of the first DC voltage intermediate circuit to a second voltage of the second DC voltage intermediate circuit,
- the electric current of the second DC voltage intermediate circuit is converted, by means of an inverter, into an electric alternating current for being fed into the electrical power supply system, wherein
- the boost converter boosts the first DC voltage to the second DC voltage only for rotation speeds below a changeover rotation speed, so that the second DC voltage is then higher than the first DC voltage and
- the changeover rotation speed in the partial-load mode is higher than in the loading mode.

9. A wind turbine (200) for generating electrical power from wind, comprising
- an aerodynamic rotor with a rotor hub and rotor blades of which the blade angle (α) is adjustable, wherein the aerodynamic rotor can be operated at a variable rotation speed,
- a generator, which is coupled to the aerodynamic rotor, for generating a generator power, wherein the generator can be operated with a variable generator torque,
- a detection device for determining a loading variable on the wind turbine (200), which indicates a load on the wind turbine (200) due to the wind, wherein the detection device is designed for determining the loading variable,
- a strain gauge (221, 222, 223) is provided on the rotor hub for detecting a hub bending moment which varies between maximum and minimum hub bending moments depending on the rotor position (β),
- at least one connection is provided between the strain gauge (221, 222, 223) and the detection device in order to transmit measured values of the strain gauge to the detection device,
- a control device which is designed for reducing the rotation speed and/or the generator power in a loading mode, when the loading variable reaches a loading limit value,
**characterized in that**
- the detection device comprises a detection block (230) and a combination block (236),
- the detection block (230) detects the measured values of the strain gauges (221, 222, 223) of all rotor blades as vectorial force variables (F1-F3) and calculates a vectorial hub bending moment component (M_{B1}, M_{B2}, M_{B3}) for each rotor blade, and
- that the combination block (236) vectorially sums the vectorial hub bending moment components (M_{B1},M_{B2},M_{B3}) to form a common hub bending moment (M_{B}), which forms the load variable.

10. The wind turbine (200) as claimed in claim 9, **characterized in that** it is designed for executing a method as claimed in one of claims 1 to 8.

## Revendications

1. Procédé destiné à faire fonctionner une éolienne (200) pour produire de l'énergie électrique à partir du vent, dans lequel
- l'éolienne (200) présente un rotor aérodynamique avec un moyeu de rotor et des pales de rotor (201, 202, 203) dont l'angle de pale (α) peut être ajusté et le rotor aérodynamique peut fonctionner à une vitesse de rotation variable, et
- l'éolienne (200) présente un générateur couplé au rotor aérodynamique pour produire une puissance de générateur, dans lequel
- le générateur peut fonctionner avec un couple de générateur variable, comprenant les étapes :
- de détermination d'une grandeur de charge sur l'éolienne (200), qui indique une charge de l'éolienne (200) par le vent,
- de passage dans un mode de charge lorsque la taille de la charge atteint ou dépasse une valeur limite de charge, et
- de réduction de la vitesse de rotation et/ou de la puissance de générateur dans le mode de charge, dans lequel le procédé est **caractérisé par** les étapes
- de détection des valeurs de mesure par des jauges de contrainte (221, 222, 223) qui sont disposées sur toutes les racines de pale (211-213) des pales de rotor, sous forme de grandeurs de force vectorielles (F₁ -F₃),
- de calcul d'une composante vectorielle de couple de flexion de moyeu (M_{B1}, M_{B2}, M_{B3}) pour chaque pale de rotor,
- d'addition vectorielle des composantes vectorielles de couple de flexion de moyeu (M_{B1}, M_{B2}, M_{B3}) en un couple de flexion de moyeu commun (M_{B}) pour former la grandeur de charge.

2. Procédé selon la revendication 1, **caractérisé en ce que** la détermination de la grandeur de charge au moyen d'un algorithme d'estimation systémique s'effectue sur la base d'au moins une mesure représentative de la charge, sur la base d'une mesure d'allongement sur le moyeu de rotor.

3. Procédé selon la revendication 1 ou 2, **caractérisé en ce que** la valeur limite de charge est fixée en fonction d'une grandeur de charge détectée comme charge de base lors d'un fonctionnement normal avec un vent nominal prédominant, en particulier de telle sorte que la valeur limite de charge est fixée au moins sur une valeur double de la charge de base.

4. Procédé selon l'une quelconque des revendications précédentes, **caractérisé en ce que** la vitesse de rotation et/ou la puissance de générateur sont réduites en fonction de la charge détectée de telle sorte que
- la grandeur de charge ne dépasse pas la valeur limite de charge et/ou
- la grandeur de charge est régulée par la réduction de la vitesse de rotation et de la puissance de générateur sur la limite de charge comme valeur de consigne ou une valeur inférieure à la valeur de consigne.

5. Procédé selon l'une quelconque des revendications précédentes, **caractérisé en ce que** la vitesse de rotation et la puissance de générateur sont réduites de telle manière que
- la grandeur de charge ne dépasse pas la valeur limite de charge,
- les pales de rotor (201, 202, 203) sont ajustées respectivement dans leur angle de pale (α) dans la direction opposée au vent,
- le couple de générateur ne dépasse pas un couple nominal de générateur et
- le couple de générateur est réduit à mesure que la vitesse du vent augmente.

6. Procédé selon l'une quelconque des revendications précédentes, **caractérisé en ce que**
- la vitesse de rotation est réduite en fonction de la grandeur de charge déterminée et
- la puissance de générateur est réduite en fonction d'une courbe caractéristique de vitesse de rotation-puissance pour le fonctionnement en charge et dans lequel
- ladite courbe caractéristique de vitesse de rotation-puissance pour le fonctionnement en charge diffère d'une courbe caractéristique de vitesse de rotation-puissance pour le fonctionnement en charge partielle, dans lequel le vent est si faible qu'une puissance nominale de générateur ne peut pas être atteinte.

7. Procédé selon la revendication 6, **caractérisé en ce que** la courbe caractéristique de vitesse de rotation-puissance pour le fonctionnement en charge présente respectivement une valeur de puissance plus élevée que celle de la courbe caractéristique de vitesse de rotation-puissance pour le fonctionnement en charge partielle, au moins dans une plage de vitesse de rotation partielle, en particulier dans une plage de vitesse de rotation de 10 % à 90 % de la vitesse de rotation nominale.

8. Procédé selon l'une quelconque des revendications précédentes, **caractérisé en ce que**, pour l'injection de la puissance électrique de générateur
- le courant électrique généré par le générateur est redressé et alimenté dans un premier circuit intermédiaire de tension continue,
- le courant redressé est amené par le premier circuit intermédiaire à tension continue à un deuxième circuit intermédiaire à tension continue, dans lequel
- un convertisseur élévateur est disposé entre le premier et le deuxième circuit intermédiaire à tension continue pour augmenter, le cas échéant, une première tension continue du premier circuit intermédiaire à tension continue à une deuxième tension du deuxième circuit intermédiaire à tension continue,
- le courant électrique du deuxième circuit intermédiaire à tension continue est transformé par un onduleur en un courant alternatif électrique destiné à être injecté dans le réseau d'alimentation électrique, dans lequel
- le convertisseur élévateur augmente la première tension continue à la deuxième tension continue uniquement pour des vitesses de rotation inférieures à une vitesse de rotation de commutation, de telle sorte que la deuxième tension continue est alors supérieure à la première tension continue et
- la vitesse de rotation de commutation en charge partielle est plus élevée que dans le fonctionnement en charge.

9. Éolienne (200) destinée à produire de l'énergie électrique à partir du vent, comprenant
- un rotor aérodynamique avec un moyeu de rotor et des pales de rotor dont l'angle de pale (α) peut être ajusté, dans lequel le rotor aérodynamique peut fonctionner à une vitesse de rotation variable,
- un générateur couplé au rotor aérodynamique, destiné à produire une puissance de générateur, dans lequel le générateur peut fonctionner avec un couple de générateur variable,
- un dispositif de détection destiné à déterminer une grandeur de charge sur l'éolienne (200), qui indique une charge de l'éolienne (200) par le vent, dans lequel le dispositif de détection est préparé pour déterminer la grandeur de charge,
- une jauge de contrainte (221, 222, 223) sur le moyeu de rotor pour détecter un couple de flexion de moyeu qui varie en fonction de la position du rotor (β) entre les couples de flexion de moyeu maximal et minimal,
- au moins une liaison de la jauge de contrainte (221, 222, 223) et du dispositif de détection qui est prévue pour transmettre des valeurs de mesure de la jauge de contrainte au dispositif de détection,
- un dispositif de commande préparé pour réduire la vitesse de rotation et/ou la puissance de générateur dans un fonctionnement en charge lorsque la grandeur de charge atteint une valeur limite de charge,
**caractérisé en ce que**
- le dispositif de détection comprend un bloc de détection (230) et un bloc de regroupement (236),
- le bloc de détection (230) détecte les valeurs de mesure des jauges de contrainte (221, 222, 223) de toutes les pales de rotor en tant que grandeurs de force vectorielles (F₁ -F₃) et calcule pour chaque pale de rotor une composante vectorielle de couple de flexion de moyeu (M_{B1}, M_{B2}, M_{B3}) et
- le bloc de regroupement (236) additionne vectoriellement les composantes vectorielles de couple de flexion de moyeu (M_{B1}, M_{B2}, M_{B3}) en un couple de flexion de moyeu commun (M_{B}), qui forme la grandeur de charge.

10. Éolienne (200) selon la revendication 9, **caractérisée en ce qu'**elle est préparée pour exécuter un procédé selon l'une quelconque des revendications 1 à 8.
